# EUROPEAN PATENT APPLICATION

(11) **EP 4 782 422 A1**
(43) Date of publication of application: **29.07.2026**
(21) Application number: 24868253.6
(22) Date of filing: 17.09.2024
(51) Int. Cl.: C04B 35/532

(54) **SLIDING COMPONENT**

(30) Priority: 19.09.2023 JP 2023151261
(71) Applicant: Eagle Industry Co., Ltd., Minato-ku Tokyo 105-8587 (JP)
(72) Inventor: ARAI, Minehiro, Tokyo 105-8587 (JP)
(74) Representative: WSL Patentanwälte Partnerschaft mbB
(86) International application number: PCT/JP2024/033138
(87) International publication number: WO 2025/063176

(57) **Abstract**

There is provided a sliding component having excellent wear resistance while ensuring self-lubricity. A sliding component, which has a sliding surface that is subjected to relative sliding, includes coke and graphite as carbonaceous materials; and resin carbide. A content of the graphite is more than 0 wt% and less than 6 wt%, and the coke constitutes a main component of the carbonaceous materials.

## Description

### {TECHNICAL FIELD}

The present invention relates to a sliding component that is subjected to relative sliding, for example, a sliding component used in a shaft sealing device that seals a rotary shaft of a rotary machine in an automobile, a general industrial machine, or other seal fields, or a sliding component used in a bearing of a machine in an automobile, a general industrial machine, or other bearing fields.

### {BACKGROUND ART}

A sliding component has a sliding surface that slides relative to a mating sliding surface, and is used as a component of a bearing that supports a rotating or reciprocating shaft or the like or a shaft sealing device that prevent leakage of a sealed fluid. For example, a mechanical seal serving as a shaft sealing device that prevents leakage of a sealed fluid includes a pair of annular sliding components, which rotate relative to each other and the sliding surfaces of which slide against each other. For example, a sliding component made of carbon described in Patent Citation 1 is composed of a main component containing graphite, coke, and non-graphitizable carbon powder, and a binder such as coal-tar pitch.

### {CITATION LIST}

### {Patent Literature}

Patent Citation 1: JP H3-12596 A (Page 2)

### {SUMMARY OF INVENTION}

### {Technical Problem}

Since graphite used as the main component of the conventional sliding component made of carbon has excellent self-lubricity, by increasing the proportion of graphite, the friction coefficient can be reduced and heat generation during sliding can be suppressed. However, since graphite has the disadvantage of being soft, when the proportion of graphite is increased, friction resistance is remarkably reduced, which is a problem.

The present invention has been made in view of such a problem, and an object of the present invention is to provide a sliding component having excellent wear resistance while ensuring self-lubricity.

### {Solution to Problem}

In order to solve the foregoing problem, a sliding component according to the present invention is a sliding component having a sliding surface that is subjected to relative sliding, the sliding component including: coke and graphite as carbonaceous materials; and resin carbide, wherein a content of the graphite is more than 0 wt% and less than 6 wt%, and the coke constitutes a main component of the carbonaceous materials. According to the feature of the present invention, while self-lubricity is ensured by the graphite, the main component of the carbonaceous materials is the coke that is hard, so that strength can be increased and wear resistance can be improved.

It may be preferable that the coke is contained in an amount of 30 wt% or more. According to this preferable configuration, wear resistance can be reliably enhanced.

It may be preferable that carbon black is contained as the carbonaceous material in an amount of more than 0 wt% and less than 5 wt%. According to this preferable configuration, glassy carbon is formed at the grain boundaries by using the carbon black that is compatible with resin, so that the sliding component can be reinforced.

It may be preferable that, clay is contained as an additive in an amount of more than 3 wt% and less than 12 wt%. According to this preferable configuration, the friction-reducing action of the clay can improve sliding properties and prevent firing cracks.

It may be preferable that activated carbon is contained as the carbonaceous material in an amount of more than 0 wt% and less than 20 wt%. According to this preferable configuration, by containing the activated carbon that is harder than the coke, the wear resistance of the sliding component can be enhanced, and by providing roughness, seizure resistance can be improved.

It may be preferable that the resin carbide is contained in an amount of more than 10 wt% and less than 50 wt%. According to this preferable configuration, the interparticle distance of the blended materials other than phenolic resin can be increased, so that roughness can be ensured.

It may be preferable that the resin carbide is a phenolic resin carbide. According to this preferable configuration, by using the phenolic resin having high mechanical strength, a relatively large amount of a carbide remains when firing is performed, so that the manufacturability of the sliding component is improved.

It may be preferable that a metal oxide is contained as an additive in an amount of more than 0 wt% and less than 8 wt%. According to this preferable configuration, by containing the metal oxide having high hardness, the adhesive wear resistance of the sliding component can be improved.

It may be preferable that the graphite is contained in an amount of 1 wt% or more and less than 6 wt%, carbon black is contained in an amount of more than 0 wt% and less than 5 wt%, clay is contained in an amount of more than 3 wt% and less than 12 wt%, activated carbon is contained in an amount of more than 0 wt% and less than 20 wt%, the resin carbide is contained in an amount of more than 10 wt% and less than 50 wt%, and a remainder consists of the coke. According to this preferable configuration, mechanical strength can be increased.

It may be preferable that the graphite is contained in an amount of 1 wt% or more and less than 6 wt%, carbon black is contained in an amount of more than 0 wt% and less than 5 wt%, clay is contained in an amount of more than 3 wt% and less than 12 wt%, activated carbon is contained in an amount of more than 0 wt% and less than 20 wt%, the resin carbide is contained in an amount of more than 10 wt% and less than 50 wt%, metal oxide is contained in an amount of more than 0 wt% and less than 8 wt%, and a remainder consists of the coke. According to this preferable configuration, the mechanical strength can be increased, and the adhesive wear resistance can be improved.

It may be preferable that a sliding surface layer of the sliding component is not impregnated with resin. According to this preferable configuration, since the sliding component itself is dense, the sliding component can be used without being impregnated with resin for the purpose of sealing pores, and can be used in a wide range of environments.

### {BRIEF DESCRIPTION OF DRAWINGS}

FIG. 1 is a table illustrating the blending compositions and each functional evaluation item of Examples 1 and 2 and Comparative Examples 1 and 2 of a sliding component according to a first embodiment of the present invention.
FIG. 2 is a table illustrating the blending compositions and each functional evaluation item of Examples 3 and 4 and Comparative Examples 3 and 4 of the sliding component in the first embodiment.
FIG. 3 is a table illustrating the blending compositions and each functional evaluation item of Examples 5 and 6 of the sliding component in the first embodiment, and Comparative Examples 5 and 6.
FIG. 4 is a table illustrating the blending compositions and each functional evaluation item of Examples 7 and 8 of the sliding component in the first embodiment, and Comparative Examples 7 and 8.
FIG. 5 is a table illustrating the blending compositions and each functional evaluation item of Examples 9 and 10 of the sliding component in the first embodiment, and Comparative Examples 9 and 10.
FIG. 6 is a table illustrating the blending compositions and each functional evaluation item of Examples 21 to 23 of the sliding component in the first embodiment.
FIG. 7 is a table illustrating the basic evaluation results of Examples 21 to 23 of the sliding component in the first embodiment, and conventional Comparative Example 21.
FIG. 8 is a cross-sectional view illustrating a testing machine used in the functional evaluation of the sliding component in the first embodiment.
FIG. 9 is a table illustrating the blending compositions and each functional evaluation item of Examples 31 and 32 of a sliding component according to a second embodiment of the present invention, and Comparative Examples 31 and 32.
FIG. 10 is a table illustrating the blending compositions and each functional evaluation item of Examples 33 and 34 of the sliding component in the second embodiment, and Comparative Examples 33 and 34.
FIG. 11 is a table illustrating the blending compositions and each functional evaluation item of Examples 35 and 36 of the sliding component in the second embodiment, and Comparative Examples 35 and 36.
FIG. 12 is a table illustrating the blending compositions and each functional evaluation item of Examples 37 and 38 of the sliding component in the second embodiment, and Comparative Examples 37 and 38.
FIG. 13 is a table illustrating the blending compositions and each functional evaluation item of Examples 39 to 41 of the sliding component in the second embodiment, and Comparative Examples 39 and 40.
FIG. 14 is a table illustrating the blending compositions and each functional evaluation item of Examples 51 to 54 of the sliding component in the second embodiment.
FIG. 15 is a table illustrating the basic evaluation results of Examples 51 to 54 of the sliding component in the second embodiment, and conventional Comparative Example 21.
FIG. 16 is a table illustrating the blending compositions and each functional evaluation item of Examples 42 to 44 of the sliding component in the second embodiment, and Comparative Examples 41 and 42.
FIG. 17 is a table illustrating the blending compositions and each functional evaluation item of Examples 55 and 56 of the sliding component in the second embodiment.
FIG. 18 is a table illustrating the basic evaluation results of Examples 55 and 56 of the sliding component in the second embodiment, and conventional Comparative Example 21.

### {DESCRIPTION OF EMBODIMENTS}

Modes for implementing a sliding component according to the present invention will be described below based on embodiments.

### {First embodiment}

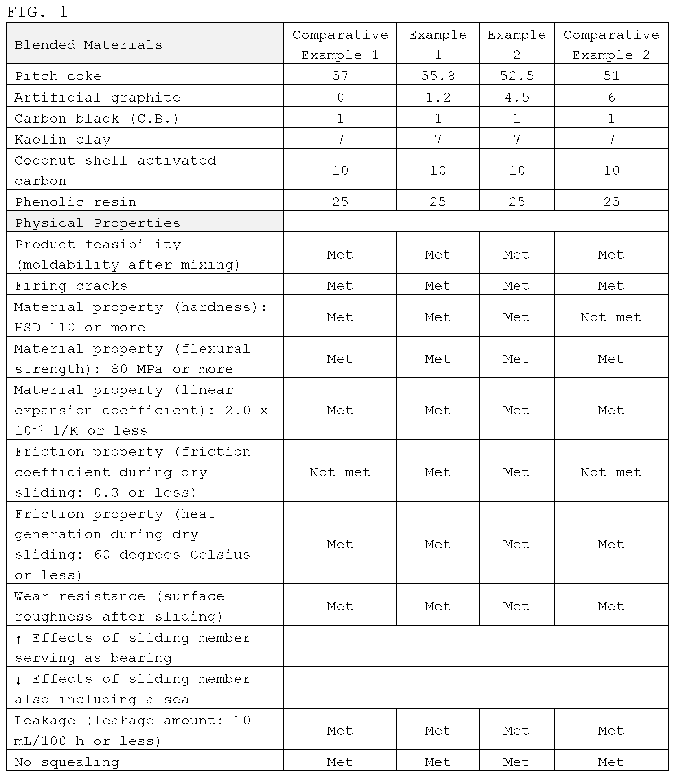

A mode in which the sliding component is a mechanical seal will be described as an example. The sliding components are manufactured using pitch coke, artificial graphite, carbon black (C.B.), clay, activated carbon, and resin as raw materials by blending the raw materials in the weight ratios illustrated in FIG. 1 and the like, kneading and crushing the raw materials, and then hot-press molding the raw materials into a predetermined ring shape at 150 kg/cm², and further heat-treating the molded articles at 1000 degrees Celsius or higher.

Pitch coke that is a carbonaceous material is the main component of the carbonaceous materials forming the skeleton structure of the sliding components. As will be described in detail later, artificial graphite, carbon black (C.B.), and activated carbon that are also carbonaceous materials are present in small amounts by weight that the combined weight percentage thereof does not exceed the weight percentage of pitch coke. That is, in this specification, the main component of the carbonaceous materials means that the main component accounts for 40 wt% or more of the carbonaceous materials.

Artificial graphite provides the function of improving lubricity, carbon black provides the function of reinforcement and the function of improving wear resistance, clay provides the function of reducing friction and the function of improving firing crack resistance and moldability, and coconut shell activated carbon provides the function of adding roughness and the function of improving wear resistance.

### (Materials)

Pitch coke: particle size 10 to 40 µm
Artificial graphite: particle size 10 to 40 µm
Carbon black: particle size 19 to 60 nm
Clay: particle size 2 to 30 µm
Coconut shell activated carbon: particle size 2 to 30 µm
Phenolic resin

### (Functional evaluation)

The sliding components were formed using various blending ratios, and functional evaluation was performed on the formed sliding components of Examples 1 to 10, together with the sliding components of Comparative Examples 1 to 10. Predetermined criteria, as will be described in detail later, that meet targets for wear resistance, applicability to the usage environment, and further lubricity are set for each functional evaluation item.

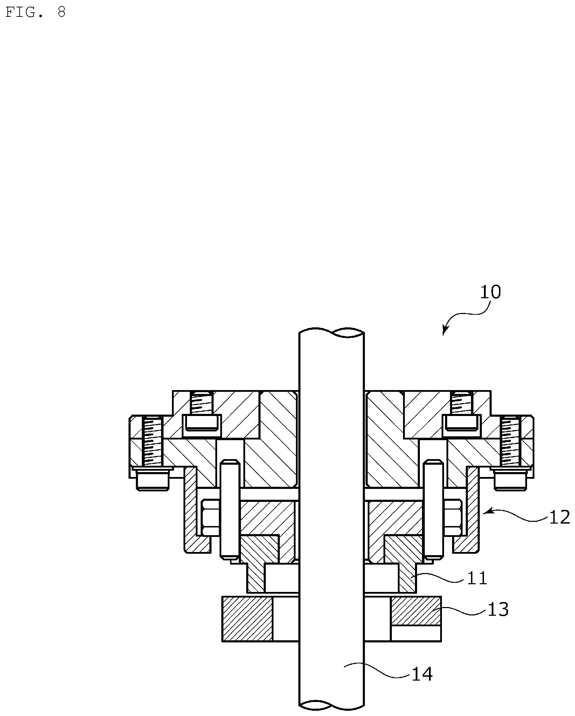

The performance of the sliding components obtained by the above-described manufacturing method was evaluated using a testing device illustrated in FIG. 8. Test conditions for performance evaluation will be described later. A testing device 10 is mainly composed of a holding mechanism 12 that holds the sliding component obtained as described above as a fixed ring 11, a rotating ring 13 having an annular shape and serving as a mating member that is disposed to face the fixed ring 11, and a rotary shaft 14 that is rotationally driven together with the rotating ring 13. In addition, the holding mechanism 12 includes a spring (not illustrated) that biases the fixed ring 11 toward the rotating ring. A rotating ring made of SiC was used as the rotating ring 13.

### (Evaluation items)

Product feasibility (moldability)
Firing cracks
Material property (hardness): HSD 110 or more
Material property (flexural strength): 80 MPa or more
Material property (linear expansion coefficient): 2.0 x 10⁻⁶ 1/K or less
Friction property (friction coefficient during dry sliding: 0.3 or less)
Friction property (heat generation during dry sliding: 60 degrees Celsius or less)
Wear resistance (surface roughness after sliding)
Leakage (leakage amount: 10 mL/100 h or less)
No squealing

### (Test conditions)

Basic evaluation conditions: Dry
Load: 0.25 MPa (33 N)
Peripheral speed: 0.66 m/s (500 rpm)
Sliding distance: 8000 m
Atmosphere: Air

Among these evaluation items, the items "friction property (friction coefficient during dry sliding: 0.3 or less)", "friction property (heat generation during dry sliding: 60 degrees Celsius or less)", "wear resistance (surface roughness after sliding)", "leakage (leakage amount: 10 mL/100 h or less)", and "no squealing" are evaluated based on the results obtained from tests under the above-described test conditions.

### (Examples 1 and 2)

The functional evaluation results of Examples 1 and 2 and Comparative Examples 1 and 2 are summarized in the table of FIG. 1.

In Examples 1 and 2 and Comparative Examples 1 and 2, the ratio of coke (pitch coke) to artificial graphite is different, and there is no relative difference in the weight percentages of the other materials, namely, carbon black (C.B.), kaolin clay, coconut shell activated carbon, and a phenolic resin carbide.

As illustrated in FIG. 1, in Comparative Example 1 containing 0 wt% of artificial graphite and 57 wt% of pitch coke, it can be seen that the criterion for the item "friction property (friction coefficient during dry sliding: 0.3 or less)" is not met. Meanwhile, Example 1 containing 1.2 wt% of artificial graphite and 55.8 wt% of pitch coke also meets the criterion for the item "friction property (friction coefficient during dry sliding: 0.3 or less)".

In addition, as illustrated in FIG. 1, in Comparative Example 2 containing 6 wt% of artificial graphite and 51 wt% of pitch coke, it can be seen that the criteria for the item "material property (hardness): HSD 110 or more" and the item "friction property (friction coefficient during dry sliding: 0.3 or less)" are not met. Meanwhile, Example 2 containing 4.5 wt% of artificial graphite and 52.5 wt% of pitch coke meets the criteria for all the items. From the functional evaluation, the result was obtained that it was appropriate for artificial graphite to be blended in a range of more than 0 wt% and less than 6 wt%, preferably 1 wt% or more and 5 wt% or less, and more preferably 1.2 wt% or more and 4.5 wt% or less.

(Examples 3 and 4)

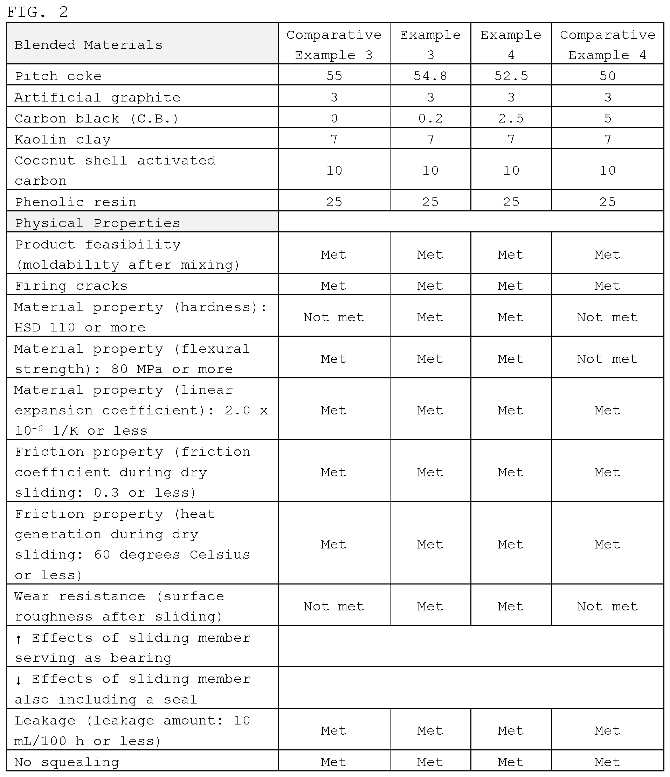

The functional evaluation results of Examples 3 and 4 and Comparative Examples 3 and 4 are summarized in the table of FIG. 2.

In Examples 3 and 4 and Comparative Examples 3 and 4, the weight percentages of pitch coke and carbon black (C.B.) are different, and there is no relative difference in the weight percentages of the other materials, namely, artificial graphite, kaolin clay, coconut shell activated carbon, and phenolic resin. In all the examples, the content of artificial graphite is set at 3 wt% that conforms to an appropriate range of more than 0 wt% and less than 6 wt%.

As illustrated in FIG. 2, in Comparative Example 3 containing 0 wt% of carbon black and 55 wt% of pitch coke, it can be seen that the criteria for the item "material property (hardness): HSD 110 or more)" and the item "wear resistance (surface roughness after sliding)" are not met. Meanwhile, Example 3 containing 0.2 wt% of carbon black and 54.8 wt% of pitch coke meets the criteria for all the items.

In addition, as illustrated in FIG. 2, in Comparative Example 4 containing 5 wt% of carbon black and 50 wt% of pitch coke, it can be seen that the criteria for the item "material property (hardness): HSD 110 or more", the item "material property (flexural strength): 80 MPa or more", and the item "wear resistance (surface roughness after sliding)" are not met. Meanwhile, Example 4 containing 2.5 wt% of carbon black and 52.5 wt% of pitch coke meets the criteria for all the items. From the functional evaluation, the result was obtained that it was appropriate for carbon black to be blended in a range of more than 0 wt% and less than 5 wt%, preferably 0.1 wt% or more and 3 wt% or less, and more preferably 0.2 wt% or more and 2.5 wt% or less.

### (Examples 5 and 6)

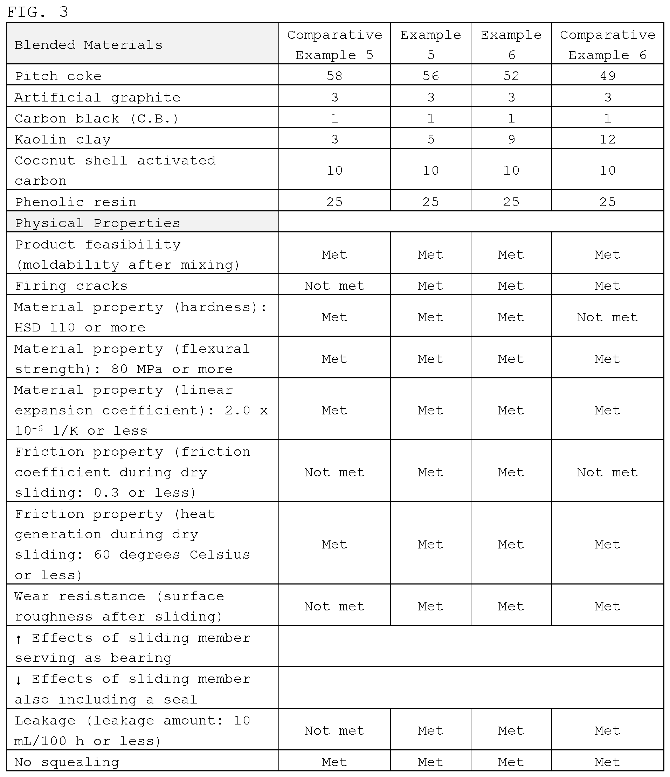

The functional evaluation results of Examples 5 and 6 and Comparative Examples 5 and 6 are summarized in the table of FIG. 3.

In Examples 5 and 6 and Comparative Examples 5 and 6, the weight percentages of pitch coke and kaolin clay are different, and there is no relative difference in the weight percentages of the other materials, namely, artificial graphite, carbon black (C.B.), coconut shell activated carbon, and phenolic resin. The weight percentages of all the materials other than kaolin clay conform to the appropriate ranges: the content of artificial graphite is set at 3 wt% in all the examples, and the content of carbon black is set at 1 wt% in all the examples.

As illustrated in FIG. 3, in Comparative Example 5 containing 3 wt% of kaolin clay and 58 wt% of pitch coke, it can be seen that the criteria for the item "firing cracks", the item "friction property (friction coefficient during dry sliding: 0.3 or less)", and the item "wear resistance (surface roughness after sliding)" are not met. Furthermore, it can be seen that the criterion for the item "leakage (leakage amount: 10 mL/100 h or less)" during sliding relative to the rotating ring is not met. Meanwhile, Example 5 containing 5 wt% of kaolin clay and 56 wt% of pitch coke meets the criteria for all the items.

In addition, as illustrated in FIG. 3, in Comparative Example 6 containing 12 wt% of kaolin clay and 49 wt% of pitch coke, it can be seen that the criteria for the item "material property (hardness): HSD 110 or more" and the item "friction property (friction coefficient during dry sliding: 0.3 or less)" are not met. Meanwhile, Example 6 containing 9 wt% of kaolin clay and 52 wt% of pitch coke meets the criteria for all the items. From the functional evaluation, the result was obtained that it was appropriate for kaolin clay to be blended in a range of more than 3 wt% and less than 12 wt%, preferably 4 wt% or more and 10 wt% or less, and more preferably 5 wt% or more and 9 wt% or less.

### (Examples 7 and 8)

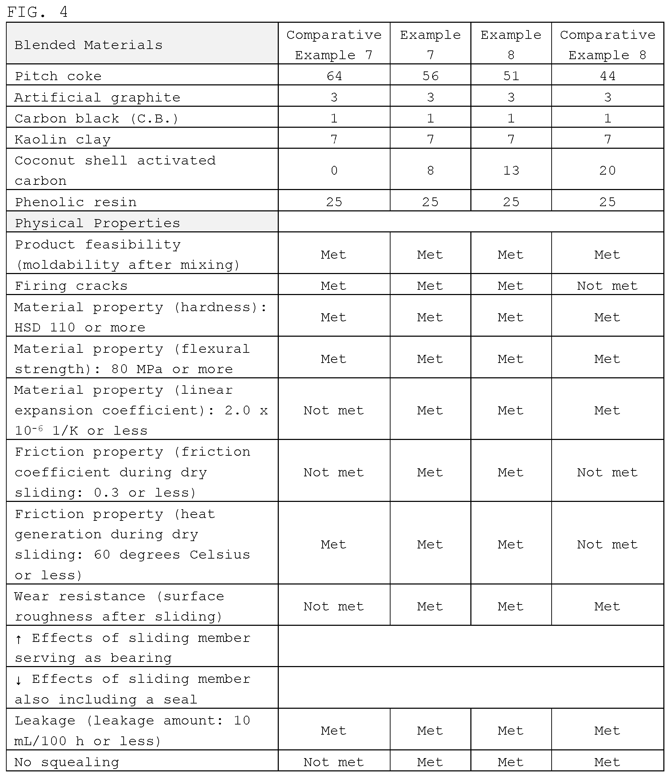

The functional evaluation results of Examples 7 and 8 and Comparative Examples 7 and 8 are summarized in the table of FIG. 4.

In Examples 7 and 8 and Comparative Examples 7 and 8, the weight percentages of pitch coke and coconut shell activated carbon are different, and there is no relative difference in the weight percentages of the other materials, namely, artificial graphite, carbon black (C.B.), kaolin clay, and phenolic resin. The weight percentages of all the materials other than coconut shell activated carbon conform to the appropriate ranges: the content of artificial graphite is set at 3 wt% in all the examples, the content of carbon black is set at 1 wt% in all the examples, and the content of kaolin clay is set at 7 wt% in all the examples.

As illustrated in FIG. 4, in Comparative Example 7 containing 0 wt% of coconut shell activated carbon and 64 wt% of pitch coke, it can be seen that the criteria for the item "material property (linear expansion coefficient): 2.0 x 10⁻⁶ 1/K or less", the item "friction property (friction coefficient during dry sliding: 0.3 or less)", and the item "wear resistance (surface roughness after sliding)" are not met. Furthermore, it can be seen that the criterion for the item "no squealing" during sliding relative to the rotating ring is not met. Meanwhile, Example 7 containing 8 wt% of coconut shell activated carbon and 56 wt% of pitch coke meets the criteria for all the items.

In addition, as illustrated in FIG. 4, in Comparative Example 8 containing 20 wt% of coconut shell activated carbon and 44 wt% of pitch coke, it can be seen that the criteria for the item "firing cracks", the item "friction property (friction coefficient during dry sliding: 0.3 or less)", and the item "friction property (heat generation during dry sliding: 60 degrees Celsius or less)" are not met. Meanwhile, Example 8 containing 13 wt% of coconut shell activated carbon and 51 wt% of pitch coke meets the criteria for all the items. From the functional evaluation, the result was obtained that it was appropriate for coconut shell activated carbon to be blended in a range of more than 0 wt% and less than 20 wt%, preferably 2 wt% or more and 15 wt% or less, and more preferably 8 wt% or more and 13 wt% or less.

### (Examples 9 to 11)

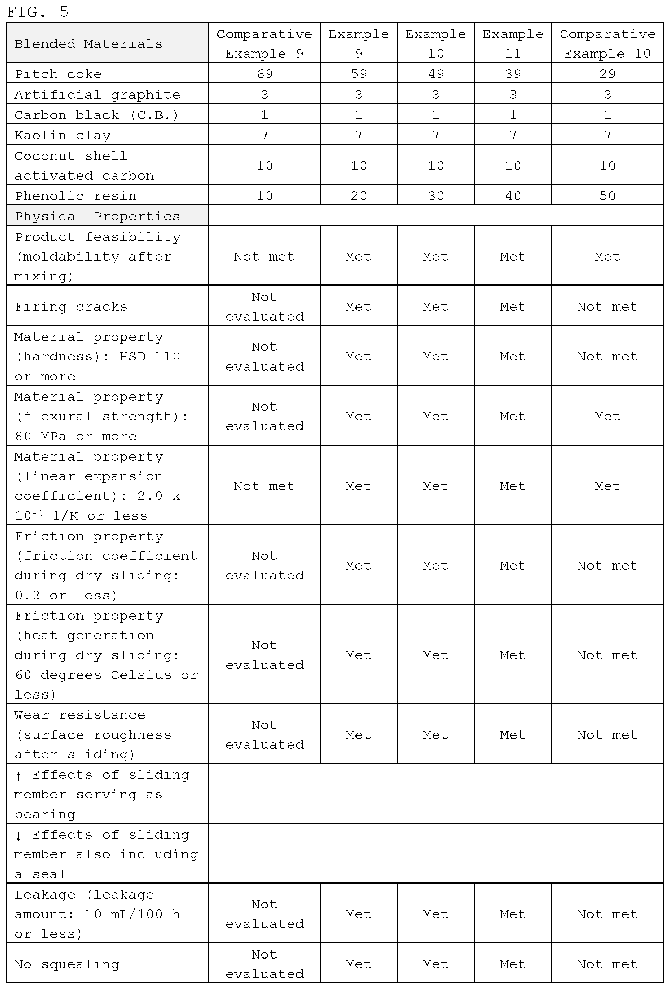

The functional evaluation results of Examples 9 to 11 and Comparative Examples 9 and 10 are summarized in the table of FIG. 5.

In Examples 9 to 11 and Comparative Examples 9 and 10, the weight percentages of pitch coke and phenolic resin are different, and there is no relative difference in the weight percentages of the other materials, namely, artificial graphite, carbon black (C.B.), kaolin clay, and coconut shell activated carbon. The weight percentages of all the materials other than phenolic resin conform to the appropriate ranges: the content of artificial graphite is set at 3 wt% in all the examples, the content of carbon black is set at 1 wt% in all the examples, the content of kaolin clay is set at 7 wt% in all the examples, and the content of coconut shell activated carbon is set at 10 wt% in all the examples.

As illustrated in FIG. 5, in Comparative Example 9 containing 10 wt% of phenolic resin and 69 wt% of pitch coke, it can be seen that the criteria for the item "product feasibility (moldability after mixing)" and the item "material property (linear expansion coefficient): 2.0 x 10⁻⁶ 1/K or less" are not met. In addition, since the conditions for moldability after mixing are not met and sliding tests using the testing device are not performed, the other items are not evaluated. Meanwhile, Example 9 containing 20 wt% of phenolic resin and 59 wt% of pitch coke meets the criteria for all the items.

In addition, as illustrated in FIG. 5, in Comparative Example 10 containing 50 wt% of phenolic resin and 29 wt% of pitch coke, it can be seen that the criteria for the item "firing cracks", the item "material property (hardness): HSD 110 or more", the item "friction property (friction coefficient during dry sliding: 0.3 or less)", the item "friction property (heat generation during dry sliding: 60 degrees Celsius or less)", and the item "wear resistance (surface roughness after sliding)" are not met. Furthermore, it can be seen that the criteria for the item "leakage (leakage amount: 10 mL/100 h or less)" during sliding relative to the rotating ring and the item "no squealing" are not met. Meanwhile, Example 11 containing 40 wt% of phenolic resin and 39 wt% of pitch coke meets the criteria for all the items.

In addition, as illustrated in FIG. 5, Example 10 that is intermediate between Example 9 and Example 11 and that contains 30 wt% of phenolic resin and 49 wt% of pitch coke meets the criteria for all the items. From the functional evaluation, the result was obtained that it was appropriate for phenolic resin to be blended in a range of more than 10 wt% and less than 50 wt%, preferably 15 wt% or more and 45 wt% or less, and more preferably 20 wt% or more and 40 wt% or less.

### (Examples 21 to 23)

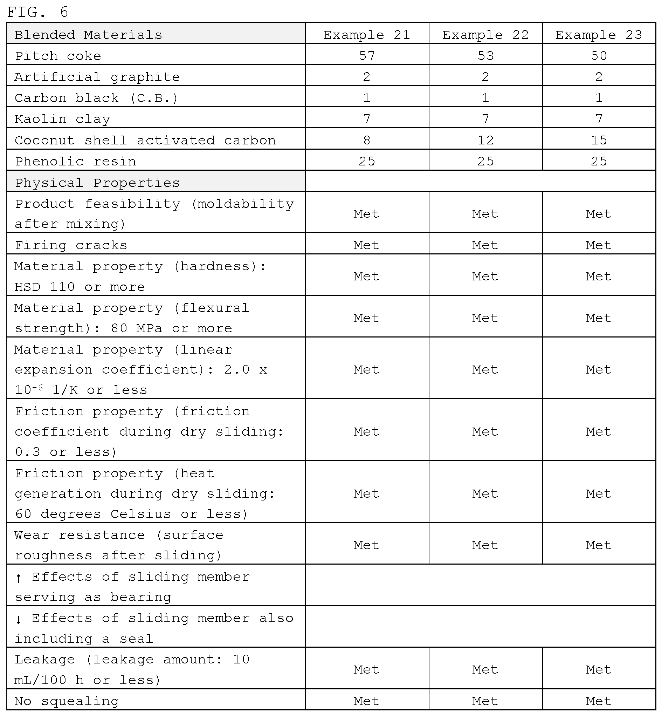

As illustrated in FIG. 6, three Examples 21 to 23 were prepared by blending the weight percentages of the blended materials that passed the above-described performance evaluation. Examples 21 to 23 meet the criteria for all the items in the functional evaluation. In addition, as a conventional example, Comparative Example 21 described in Patent Citation 1 was prepared by using artificial graphite as the main component and resin as a binder, adding additives according to the application, and performing mixing, molding, and firing. Examples 21 to 23 and Comparative Example 21 were formed in the same shape and dimensions as those of Examples 1 to 10 described above.

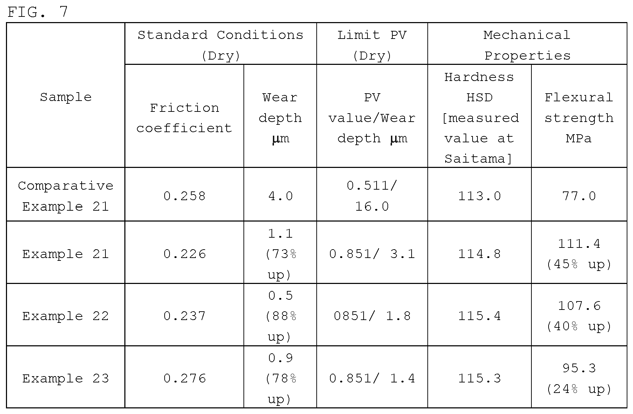

The basic evaluation results of Examples 21 to 23 and conventional Comparative Example 21 are summarized in the table of FIG. 7.

As illustrated in FIG. 7, Examples 21 to 23 exhibit values for friction coefficient and hardness HSD that are equivalent to those of Comparative Example 21, and is significantly improved in flexural strength MPa compared to Comparative Example 21. Further, in Examples 21 to 23, the values of wear depth µm are significantly reduced compared to Comparative Example 21. In such a manner, it was found that the sliding components of Examples 21 to 23 met the required criteria for friction coefficient, namely, lubricity and mechanical properties and were significantly improved in wear resistance compared to Comparative Example 21 in which artificial graphite was used as the main component.

In addition, in Examples 21 to 23, the weight percentages of pitch coke and coconut shell activated carbon are different, and there is no relative difference in the weight percentages of the other materials, namely, artificial graphite, carbon black (C.B.), kaolin clay, and phenolic resin. In Example 21, the weight percentage of activated carbon is the lowest, and in Example 23, the weight percentage of activated carbon is the highest.

Here, although not illustrated in FIG. 7, it was found that the higher the weight percentage of coconut shell activated carbon was, the more effective it was in suppressing a sudden increase in heat generation during sliding.

Incidentally, in Example 23 in which the weight percentage of coconut shell activated carbon was the highest, seizure beyond the standard range occurred on the sliding surface. Therefore, it can be said that, in order to suppress the occurrence of seizure, it is more preferable that the content of coconut shell activated carbon is less than 15 wt%.

From the above-described functional evaluation, it was found that, by manufacturing the sliding components such that the content of artificial graphite was more than 0 wt% and less than 6 wt% and pitch coke constituted the main component of the carbonaceous materials, strength could be increased and wear resistance could be improved. In addition, by adding a small amount of artificial graphite that has excellent self-lubricity compared to pitch coke, the friction coefficient of the sliding surface can be reduced.

In addition, by containing pitch coke, which was harder than artificial graphite, in an amount of 30 wt% or more, wear resistance could be reliably enhanced.

In addition, by containing carbon black, which was compatible with phenolic resin, in an amount of more than 0 wt% and less than 5 wt%, it was possible to reinforce the sliding components while reducing the weight percentage of the binder.

In addition, by containing kaolin clay, which has a smaller friction coefficient than pitch coke, as an additive in an amount of more than 3 wt% or less than 12 wt%, the friction-reducing action of kaolin clay can improve sliding properties and reduce the friction coefficient, particularly, in a dry environment. In addition, firing cracks could be prevented.

In addition, by containing coconut shell activated carbon, which was harder than pitch coke, as a carbonaceous material in an amount of more than 0 wt% and less than 20 wt%, the wear resistance of the sliding components could be enhanced, and by providing roughness, seizure resistance could be improved.

In addition, by containing phenolic resin in an amount of more than 10 wt% and less than 50 wt%, the interparticle distance of the blended materials other than phenolic resin can be increased, so that roughness can be ensured. From the viewpoint of expecting further improvement in roughness, it is preferable that phenol resin is contained in an amount of 20 wt% or more and 40 wt% or less, and it is more preferable that phenolic resin is contained in an amount of 20 wt% or more and 35 wt% or less.

In addition, by using phenolic resin, which has a high residual carbon ratio after firing (the carbonization ratio is high when firing is performed), the manufacturability of the sliding components can be improved.

In addition, by containing artificial graphite in an amount of more than 0 wt% and less than 6 wt%, carbon black in an amount of more than 0 wt% and less than 5 wt%, kaolin clay in an amount of more than 3 wt% and less than 12 wt%, coconut shell activated carbon in an amount of more than 0 wt% and less than 20 wt%, phenolic resin in an amount of more than 10 wt% and less than 50 wt%, and the remainder consisting of pitch coke, the weight percentage of phenolic resin could be relatively reduced, and mechanical strength could be effectively increased.

From the viewpoint of expecting further improvement in mechanical strength, it is preferable that artificial graphite is contained in an amount of 1 wt% or more and 5 wt% or less, carbon black is contained in an amount of 0.1 wt% or more and 3 wt% or less, kaolin clay is contained in an amount of 4 wt% or more and 10 wt% or less, coconut shell activated carbon is contained in an amount of 2 wt% or more and 15 wt% less, phenolic resin is contained in an amount of 15 wt% or more and 45 wt% and less, and the remainder consists of pitch coke, and it is more preferable that artificial graphite is contained in an amount of 1.2 wt% or more and 4.5 wt% or less, carbon black is contained in an amount of 0.2 wt% or more and 2.5 wt% or less, kaolin clay is contained in an amount of 5 wt% or more and 9 wt% or less, coconut shell activated carbon is contained in an amount of 8 wt% or more and 13 wt% or less, phenolic resin is contained in an amount of 20 wt% or more and 40 wt% or less, and the remainder consists of pitch coke. Incidentally, approximately 0.5 wt% of unavoidable impurities may be contained.

In addition, since coal-tar pitch is not used as a binder, the formation of pores after firing is suppressed and the sliding components are densely formed, so that resin impregnation for the purpose of sealing the pores is not required. In such a manner, since the sliding surface layer of the sliding components are not impregnated with resin, the sliding components have excellent heat resistance and chemical resistance, and can be used in a wide range of environments.

### {Second embodiment}

Next, a sliding component according to a second embodiment will be described below. Incidentally, the description of configurations that are the same as and overlap with the configurations of the first embodiment will be omitted.

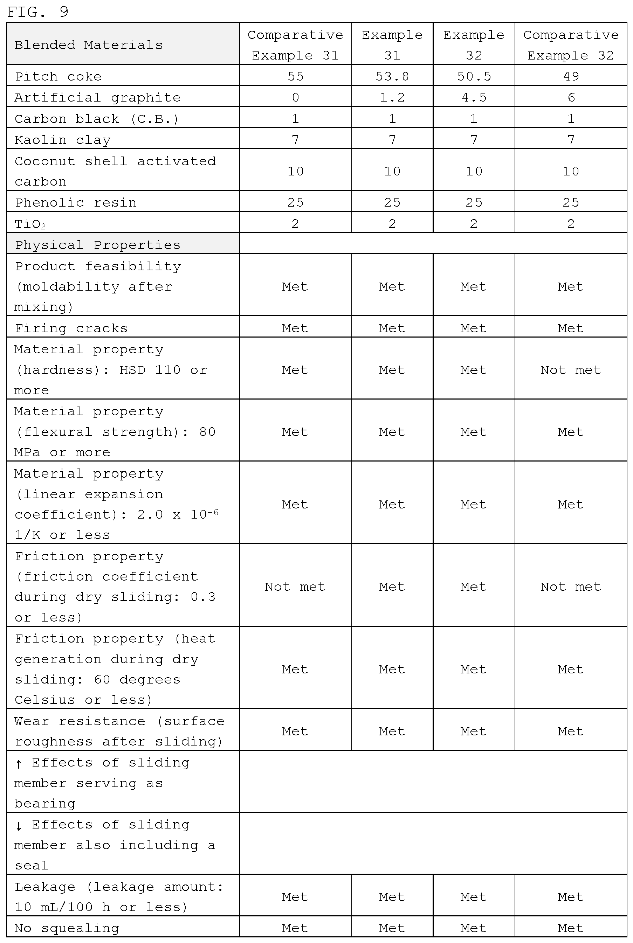

The sliding components are manufactured using pitch coke, artificial graphite, carbon black (C.B.), clay, activated carbon, resin, and titanium oxide (IV) (TiO₂) as a metal oxide, which is an additive, as raw materials by blending the raw materials in the weight percentages illustrated in FIG. 9 and the like, kneading and crushing the raw materials, and then hot-press molding the raw materials into a predetermined ring shape at 150 kg/cm², and further heat-treating the molded articles at 1000 degrees Celsius or higher.

Titanium oxide (IV) provides the function of adding roughness and the function of improving wear resistance.

### (Materials)

Pitch coke: particle size 10 to 40 µm
Artificial graphite: particle size 10 to 40 µm
Carbon black: particle size 19 to 60 nm
Clay: particle size 2 to 30 µm
Coconut shell activated carbon: particle size 2 to 30 µm
Phenolic resin
TiO₂: particle size 2.10 to 2.55 µm

### (Functional evaluation)

The sliding components were formed using various weight percentages, and functional evaluation was performed on the formed sliding components of Examples 31 to 44, together with the sliding components of Comparative Examples 31 to 42. Each functional evaluation item was the same as that of the first embodiment; however, the determination criteria for the items "wear resistance (surface roughness after sliding)" and "no squealing" were set to be stricter than those of the first embodiment.

### (Examples 31 and 32)

The functional evaluation results of Examples 31 and 32 and Comparative Examples 31 and 32 are summarized in the table of FIG. 9.

In Examples 31 and 32 and Comparative Examples 31 and 32, the ratio of coke (pitch coke) to artificial graphite is different, and there is no relative difference in the weight percentages of the other materials, namely, carbon black (C.B.), kaolin clay, coconut shell activated carbon, a phenolic resin carbide, and titanium oxide (IV) (TiO₂).

As illustrated in FIG. 9, in Comparative Example 31 containing 0 wt% of artificial graphite and 55 wt% of pitch coke, it can be seen that the criterion for the item "friction property (friction coefficient during dry sliding: 0.3 or less)" is not met. Meanwhile, Example 31 containing 1.2 wt% of artificial graphite and 53.8 wt% of pitch coke meets the criteria for all the items.

In addition, as illustrated in FIG. 9, in Comparative Example 32 containing 6 wt% of artificial graphite and 49 wt% of pitch coke, it can be seen that the criteria for the item "material property (hardness): HSD 110 or more" and the item "friction property (friction coefficient during dry sliding: 0.3 or less)" are not met. Meanwhile, Example 32 containing 4.5 wt% of artificial graphite and 50.5 wt% of pitch coke meets the criteria for all the items. From the functional evaluation, the result was obtained that it was appropriate for artificial graphite to be blended in a range of more than 0 wt% and less than 6 wt%, preferably 1 wt% or more and 5 wt% or less, and more preferably 1.2 wt% or more and 4.5 wt% or less.

### (Examples 33 and 34)

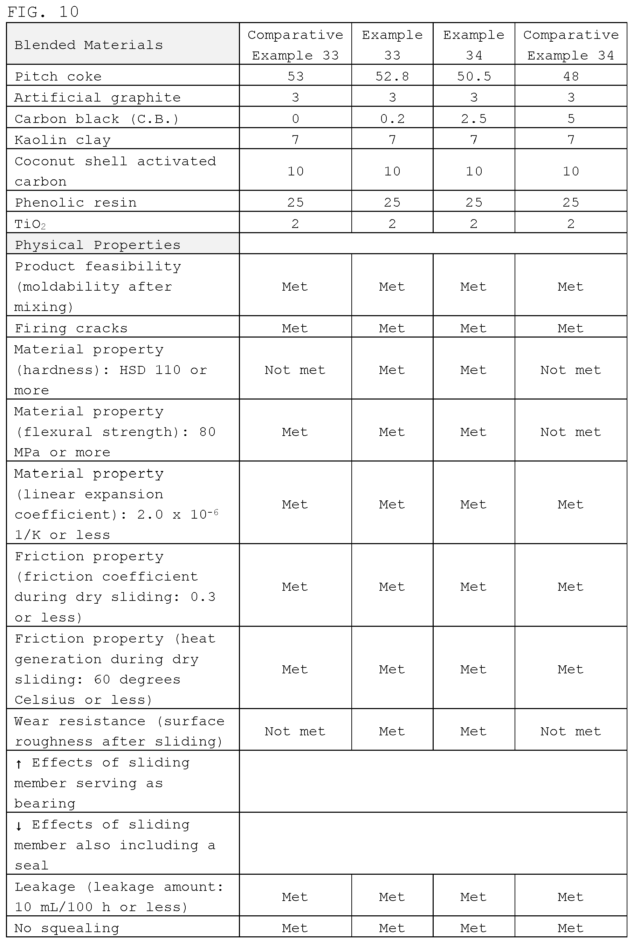

The functional evaluation results of Examples 33 and 34 and Comparative Examples 33 and 34 are summarized in the table of FIG. 10.

In Examples 33 and 34 and Comparative Examples 33 and 34, the blending ratio of pitch coke to carbon black (C.B.) is different, and there is no relative difference in the weight percentages of the other materials, namely, artificial graphite, kaolin clay, coconut shell activated carbon, phenolic resin, and titanium oxide (IV) (TiO₂). In all the examples, the content of artificial graphite is set at 3 wt% that conforms to an appropriate range of more than 0 wt% and less than 6 wt%.

As illustrated in FIG. 10, in Comparative Example 33 containing 0 wt% of carbon black and 53 wt% of pitch coke, it can be seen that the criteria for the item "material property (hardness): HSD 110 or more)" and the item "wear resistance (surface roughness after sliding)" are not met. Meanwhile, Example 33 containing 0.2 wt% of carbon black and 52.8 wt% of pitch coke meets the criteria for all the items.

In addition, as illustrated in FIG. 10, in Comparative Example 34 containing 5 wt% of carbon black and 48 wt% of pitch coke, it can be seen that the criteria for the item "material property (hardness): HSD 110 or more", the item "material property (flexural strength): 80 MPa or more", and the item "wear resistance (surface roughness after sliding)" are not met. Meanwhile, Example 34 containing 2.5 wt% of carbon black and 50.5 wt% of pitch coke meets the criteria for all the items. From the functional evaluation, the result was obtained that it was appropriate for carbon black to be blended in a range of more than 0 wt% and less than 5 wt%, preferably 0.1 wt% or more and 3 wt% or less, and more preferably 0.2 wt% or more and 2.5 wt% or less.

(Examples 35 and 36)

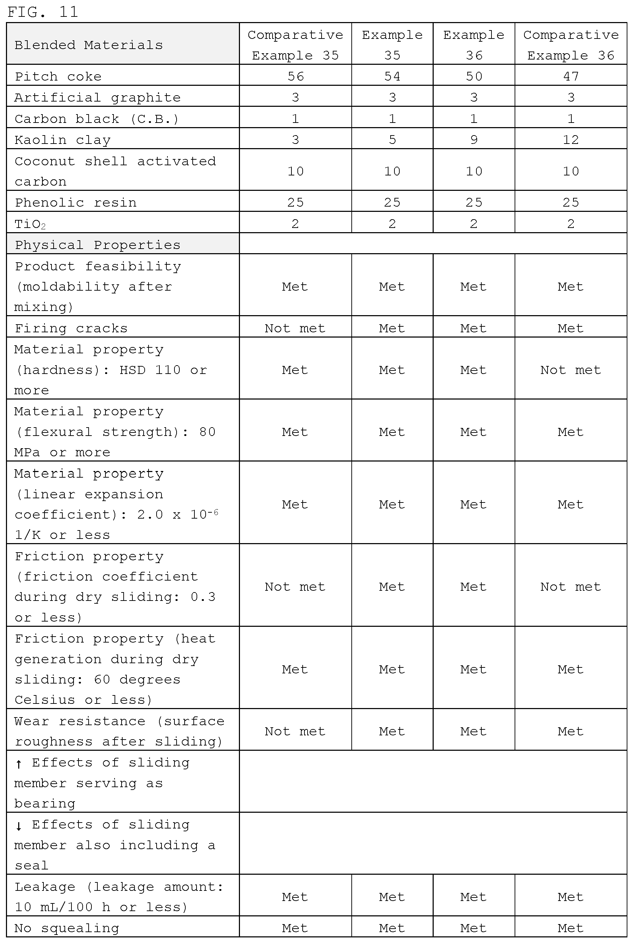

The functional evaluation results of Examples 35 and 36 and Comparative Examples 35 and 36 are summarized in the table of FIG. 11.

In Examples 35 and 36 and Comparative Examples 35 and 36, the weight percentages of pitch coke and kaolin clay are different, and there is no relative difference in the weight percentages of the other materials, namely, artificial graphite, carbon black (C.B.), coconut shell activated carbon, phenolic resin, and titanium oxide (IV) (TiO₂). The weight percentages of all the materials other than kaolin clay conform to the appropriate ranges: the content of artificial graphite is set at 3 wt% in all the examples, and the content of carbon black is set at 1 wt% in all the examples.

As illustrated in FIG. 11, in Comparative Example 35 containing 3 wt% of kaolin clay and 56 wt% of pitch coke, it can be seen that the criteria for the item "firing cracks", the item "friction property (friction coefficient during dry sliding: 0.3 or less)", and the item "wear resistance (surface roughness after sliding)" are not met. Meanwhile, Example 35 containing 5 wt% of kaolin clay and 54 wt% of pitch coke meets the criteria for all the items.

In addition, as illustrated in FIG. 11, in Comparative Example 36 containing 12 wt% of kaolin clay and 47 wt% of pitch coke, it can be seen that the criteria for the item "material property (hardness): HSD 110 or more" and the item "friction property (friction coefficient during dry sliding: 0.3 or less)" are not met. Meanwhile, Example 36 containing 9 wt% of kaolin clay and 50 wt% of pitch coke meets the criteria for all the items. From the functional evaluation, the result was obtained that it was appropriate for kaolin clay to be blended in a range of more than 3 wt% and less than 12 wt%, preferably 4 wt% or more and 10 wt% or less, and more preferably 5 wt% or more and 9 wt% or less.

(Examples 37 and 38)

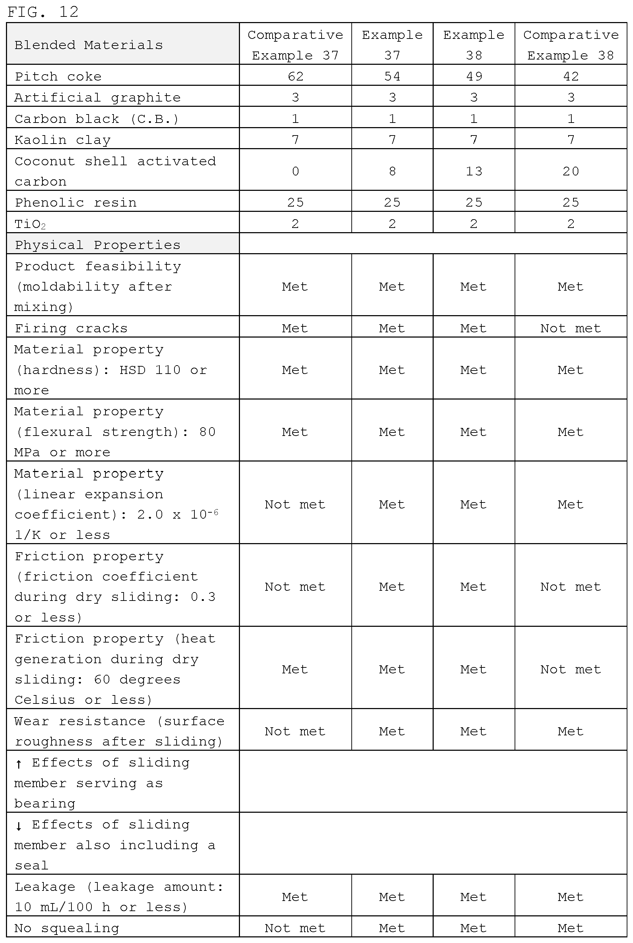

The functional evaluation results of Examples 37 and 38 and Comparative Examples 37 and 38 are summarized in the table of FIG. 12.

In Examples 37 and 38 and Comparative Examples 37 and 38, the weight percentages of pitch coke and coconut shell activated carbon are different, and there is no relative difference in the weight percentages of the other materials, namely, artificial graphite, carbon black (C.B.), kaolin clay, phenolic resin, and titanium oxide (IV) (TiO₂). The weight percentages of all the materials other than coconut shell activated carbon conform to the appropriate ranges: the content of artificial graphite is set at 3 wt% in all the examples, the content of carbon black is set at 1 wt% in all the examples, and the content of kaolin clay is set at 7 wt% in all the examples.

As illustrated in FIG. 12, in Comparative Example 37 containing 0 wt% of coconut shell activated carbon and 62 wt% of pitch coke, it can be seen that the criteria for the item "material property (linear expansion coefficient): 2.0 x 10⁻⁶ 1/K or less", the item "friction property (friction coefficient during dry sliding: 0.3 or less)", and the item "wear resistance (surface roughness after sliding)" are not met. Furthermore, it can be seen that the criterion for the item "no squealing" during sliding relative to the rotating ring is not met. Meanwhile, Example 37 containing 8 wt% of coconut shell activated carbon and 54 wt% of pitch coke meets the criteria for all the items.

In addition, as illustrated in FIG. 12, in Comparative Example 38 containing 20 wt% of coconut shell activated carbon and 42 wt% of pitch coke, it can be seen that the criteria for the item "firing cracks", the item "friction property (friction coefficient during dry sliding: 0.3 or less)", and the item "friction property (heat generation during dry sliding: 60 degrees Celsius or less)" are not met. Meanwhile, Example 38 containing 13 wt% of coconut shell activated carbon and 49 wt% of pitch coke meets the criteria for all the items. From the functional evaluation, the result was obtained that it was appropriate for coconut shell activated carbon to be blended in a range of more than 0 wt% and less than 20 wt%, preferably 2 wt% or more and 15 wt% or less, and more preferably 8 wt% or more and 13 wt% or less.

In addition, although direct illustration was omitted, three samples were created by adding 2 wt% of titanium oxide (IV) (TiO₂) to each of Examples 21 to 23 and reducing the content of pitch coke by 2 wt%, and functional evaluation and basic evaluation were performed on the samples. The three samples met the criteria for all the items in the functional evaluation. In addition, in the basic evaluation, substantially the same results as those of Examples 21 to 23 were obtained.

(Examples 39 to 41)

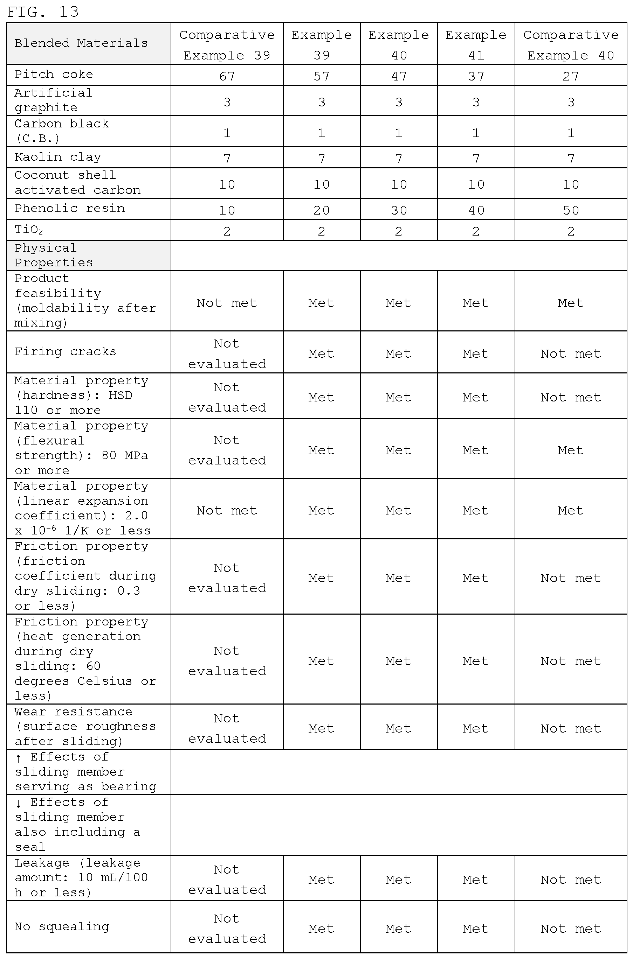

The functional evaluation results of Examples 39 to 41 and Comparative Examples 39 and 40 are summarized in the table of FIG. 13.

In Examples 39 to 41 and Comparative Examples 39 and 40, the weight percentages of pitch coke and phenolic resin are different, and there is no relative difference in the weight percentages of the other materials, namely, artificial graphite, carbon black (C.B.), kaolin clay, coconut shell activated carbon, and titanium oxide (IV) (TiO₂). The weight percentages of all the materials other than phenolic resin conform to the appropriate ranges: the content of artificial graphite is set at 3 wt% in all the examples, the content of carbon black is set at 1 wt% in all the examples, the content of kaolin clay is set at 7 wt% in all the examples, and the content of coconut shell activated carbon is set at 10 wt% in all the examples.

As illustrated in FIG. 13, in Comparative Example 39 containing 10 wt% of phenolic resin and 67 wt% of pitch coke, it can be seen that the criteria for the item "product feasibility (moldability after mixing)" and the item "material property (linear expansion coefficient): 2.0 x 10⁻⁶ 1/K or less" are not met. In addition, since the conditions for moldability after mixing are not met and sliding tests using the testing device are not performed, the other items are not evaluated. Meanwhile, Example 39 containing 20 wt% of phenolic resin and 57 wt% of pitch coke meets the criteria for all the items.

In addition, as illustrated in FIG. 13, in Comparative Example 40 containing 50 wt% of phenolic resin and 27 wt% of pitch coke, it can be seen that the criteria for the item "firing cracks", the item "material property (hardness): HSD 110 or more", the item "friction property (friction coefficient during dry sliding: 0.3 or less)", the item "friction property (heat generation during dry sliding: 60 degrees Celsius or less), and the item "wear resistance (surface roughness after sliding)" are not met. Furthermore, it can be seen that the criteria for the item "leakage (leakage amount: 10 mL/100 h or less)" during sliding relative to the rotating ring and the item "no squealing" are not met. Meanwhile, Example 41 containing 40 wt% of phenolic resin and 37 wt% of pitch coke meets the criteria for all the items.

In addition, as illustrated in FIG. 13, Example 40 that is intermediate between Example 39 and Example 41 and that contains 30 wt% of phenolic resin and 47 wt% of pitch coke meets the criteria for all the items. From the functional evaluation, the result was obtained that it was appropriate for phenolic resin to be blended in a range of more than 10 wt% and less than 50 wt%, preferably 15 wt% or more and 45 wt% or less, and more preferably 20 wt% or more and 40 wt% or less.

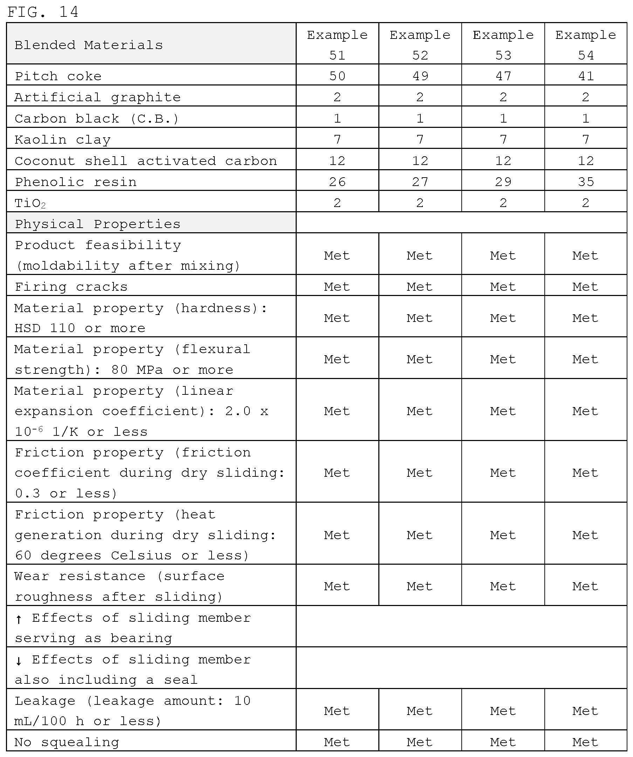

As illustrated in FIG. 14, four Examples 51 to 54 were prepared by blending the weight percentages of the blended materials that passed the above-described performance evaluation or the evaluation involving titanium oxide (IV) to be described below. In Examples 51 to 54, the weight percentages of pitch coke and phenolic resin are different, and there is no relative difference in the weight percentages of the other materials, namely, artificial graphite, carbon black (C.B.), kaolin clay, coconut shell activated carbon, and titanium oxide (IV). In Example 51, the weight percentage of phenolic resin is the lowest, and in Example 54, the weight percentage of phenolic resin is the highest. Examples 51 to 54 meet the criteria for all the items in the functional evaluation.

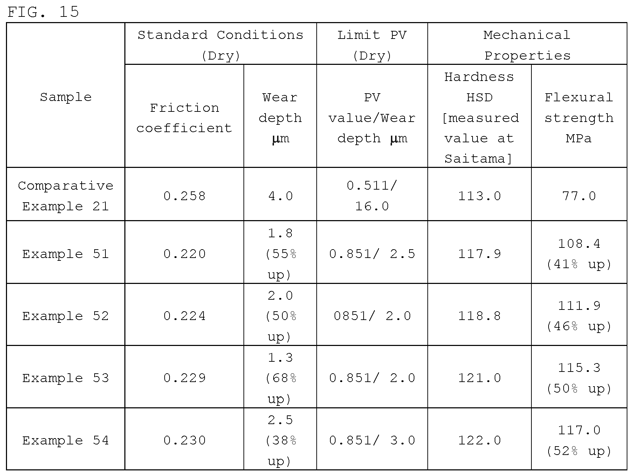

In addition, the basic evaluation results of Examples 51 to 54 and conventional Comparative Example 21 are summarized in the table of FIG. 15.

As illustrated in FIG. 15, Examples 51 to 54 exhibit values for friction coefficient and hardness HSD that are equivalent to those of Comparative Example 21, and is significantly improved in flexural strength MPa compared to Comparative Example 21. Further, in Examples 51 to 54, the values of wear depth µm are significantly reduced compared to Comparative Example 21. In such a manner, it was found that the sliding components of Examples 51 to 54 met the required criteria for friction coefficient, namely, lubricity and mechanical properties and were significantly improved in wear resistance compared to Comparative Example 21.

### (Examples 42 to 44)

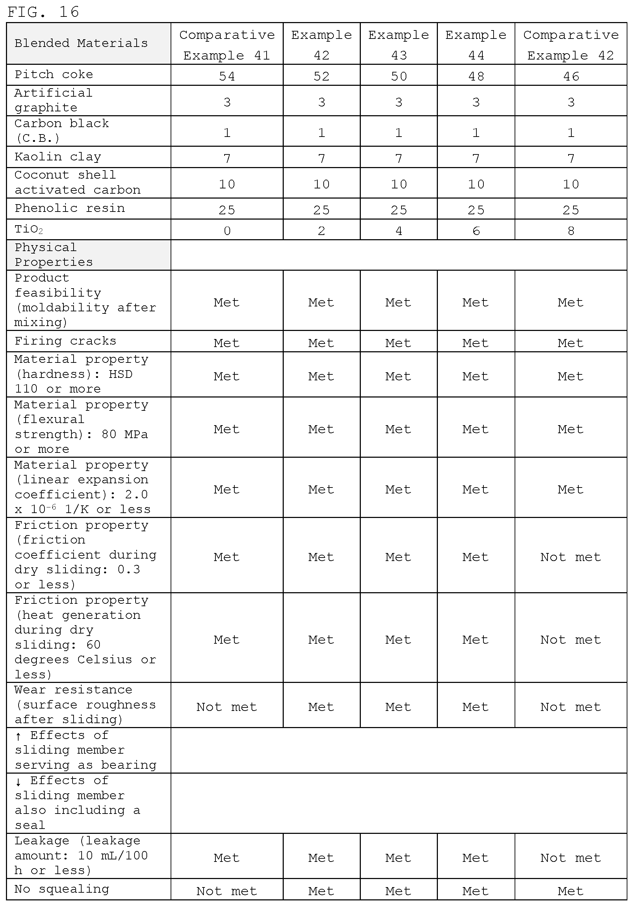

The functional evaluation results of Examples 42 to 44 and Comparative Examples 41 and 42 are summarized in the table of FIG. 16.

In Examples 42 to 44 and Comparative Examples 41 and 42, the weight percentages of pitch coke and titanium oxide (IV) (TiO₂) are different, and there is no relative difference in the weight percentages of the other materials, namely, artificial graphite, carbon black (C.B.), kaolin clay, coconut shell activated carbon, and phenolic resin. The weight percentages of all the materials other than titanium oxide (IV) conform to the appropriate ranges: the content of artificial graphite is set at 3 wt% in all the examples, the content of carbon black is set at 1 wt% in all the examples, the content of kaolin clay is set at 7 wt% in all the examples, the content of coconut shell activated carbon is set at 10 wt% in all the examples, and the content of phenolic resin is set at 25% in all the examples.

As illustrated in FIG. 16, in Comparative Example 41 containing 0 wt% of titanium oxide (IV) and 54 wt% of pitch coke, it can be seen that the criterion for the item "wear resistance (surface roughness after sliding)" is not met. Furthermore, it can be seen that the criterion for the item "no squealing" during sliding relative to the rotating ring is not met. Meanwhile, Example 42 containing 2 wt% of titanium oxide (IV) and 52 wt% of pitch coke meets the criteria for all the items.

In addition, as illustrated in FIG. 16, in Comparative Example 42 containing 8 wt% of titanium oxide (IV) and 46 wt% of pitch coke, it can be seen that the criteria for the item "friction property (friction coefficient during dry sliding: 0.3 or less)", the item "friction property (heat generation during dry sliding: 60 degrees Celsius or less)", and the item "wear resistance (surface roughness after sliding)" are not met. Furthermore, it can be seen that the criterion for the item "leakage (leakage amount: 10 mL/100 h or less)" during sliding relative to the rotating ring is not met. Meanwhile, Example 44 containing 6 wt% of titanium oxide (IV) and 48 wt% of pitch coke meets the criteria for all the items.

In addition, as illustrated in FIG. 16, Example 43 that is intermediate between Example 42 and Example 44 and that contains 4 wt% of titanium oxide (IV) and 50 wt% of pitch coke meets the criteria for all the items. From the functional evaluation, the result was obtained that it was appropriate for titanium oxide (IV) to be blended in a range of more than 0 wt% and less than 8 wt%, preferably 1 wt% or more and 7 wt% or less, and more preferably 2 wt% or more and 6 wt% or less.

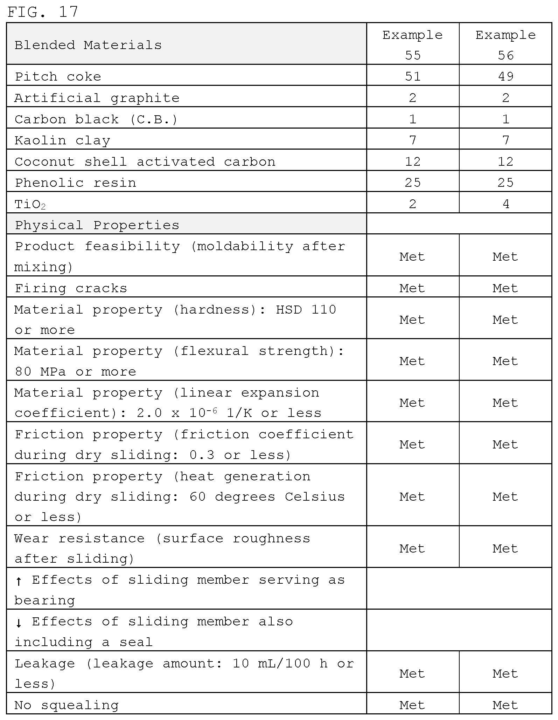

As illustrated in FIG. 17, two Examples 55 and 56 were prepared by blending the weight percentages of the blended materials that passed the above-described performance evaluation. In Examples 55 and 56, the weight percentages of pitch coke and titanium oxide (IV) are different, and there is no relative difference in the weight percentages of the other materials, namely, artificial graphite, carbon black (C.B.), kaolin clay, coconut shell activated carbon, and phenolic resin. In Example 55, the weight percentage of titanium oxide (IV) is the lowest, and in Example 56, the weight percentage of titanium oxide (IV) is the highest. Examples 55 and 56 meet the criteria for all the items in the functional evaluation.

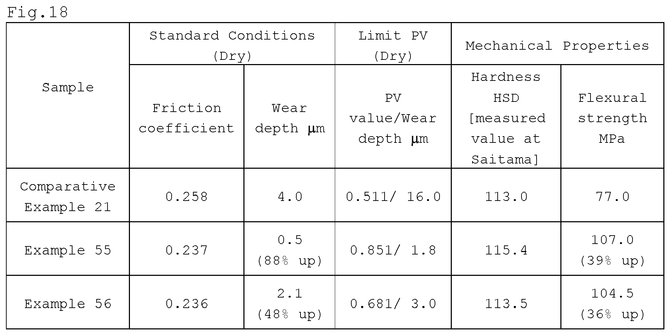

In addition, the basic evaluation results of Examples 55 and 56 and conventional Comparative Example 21 are summarized in the table of FIG. 18.

As illustrated in FIG. 18, Examples 55 and 56 exhibit values for friction coefficient and hardness HSD that are equivalent to those of Comparative Example 21, and are significantly improved in flexural strength MPa compared to Comparative Example 21. Further, in Examples 55 and 56, the values of wear depth µm are significantly reduced compared to Comparative Example 21. In such a manner, it was found that the sliding components of Examples 55 and 56 met the required criteria for friction coefficient, namely, lubricity and mechanical properties and were significantly improved in wear resistance compared to Comparative Example 21.

From the above-described functional evaluation, by manufacturing the sliding components with high-hardness titanium oxide (IV) blended in an amount of more than 0 wt% and less than 8 wt%, the adhesive wear resistance of the sliding components can be improved. From the functional evaluation, compared to the first embodiment, the mirror-finishing of each sliding surface caused by adhesive wear could be suppressed, so that the relative roughness between the sliding surfaces could be maintained.

In addition, by containing phenolic resin in an amount of 20 wt% or more and 35 wt% or less, the interparticle distance of the blended materials other than phenolic resin could be increased, so that roughness could be ensured and the occurrence of squealing could be reduced.

In addition, by containing artificial graphite in an amount of more than 0 wt% and less than 6 wt%, carbon black in an amount of more than 0 wt% and less than 5 wt%, kaolin clay in an amount of more than 3 wt% and less than 12 wt%, coconut shell activated carbon in an amount of more than 0 wt% and less than 20 wt%, phenolic resin in an amount of more than 10 wt% and less than 50 wt%, titanium oxide (IV) in an amount of more than 0 wt% and less than 8 wt%, and the remainder consisting of pitch coke, mechanical strength could be effectively increased, and adhesive wear resistance could be improved.

From the viewpoint of expecting further improvement in mechanical strength and adhesive wear resistance, it is preferable that artificial graphite is contained in an amount of 1 wt% or more and 5 wt% or less, carbon black is contained in an amount of 0.1 wt% or more and 3 wt% or less, kaolin clay is contained in an amount of 4 wt% or more and 10 wt% or less, coconut shell activated carbon is contained in an amount of 2 wt% or more and 15 wt% less, phenolic resin is contained in an amount of 15 wt% or more and 45 wt% and less, titanium oxide (IV) is contained in an amount of 1 wt% or more and 7 wt% or less, and the remainder consists of pitch coke, and it is more preferable that artificial graphite is contained in an amount of 1.2 wt% or more and 4.5 wt% or less, carbon black is contained in an amount of 0.2 wt% or more and 2.5 wt% or less, kaolin clay is contained in an amount of 5 wt% or more and 9 wt% or less, coconut shell activated carbon is contained in an amount of 8 wt% or more and 13 wt% or less, phenolic resin is contained in an amount of 20 wt% or more and 40 wt% or less, titanium oxide (IV) is contained in an amount of 2 wt% or more and 6 wt% or less, and the remainder consists of pitch coke. Incidentally, approximately 0.5 wt% of unavoidable impurities may be contained.

The embodiments of the present invention have been described above with reference to the drawings; however, the specific configurations are not limited to the embodiments, and modifications or additions that are made without departing from the scope of the present invention are also included in the present invention.

For example, in the first and second embodiments, a mechanical seal for general industrial machines has been described as a usage example of the sliding component; however, the present invention may be applied to other mechanical seals for automobiles, water pumps, and the like. In addition, the sliding component is not limited to a mechanical seal, and may be a sliding component other than a mechanical seal, such as a slide bearing.

In addition, the coke used as the main component of the carbonaceous materials of the sliding component is not limited to pitch coke, and may be, for example, calcined coke or coal coke.

In addition, the clay used as an additive is not limited to kaolin clay, and may be, for example, pyrophyllite clay.

In addition, the activated carbon is not limited to coconut shell activated carbon, and may be, for example, coal-based activated carbon.

In addition, the resin used as a binder is not limited to phenolic resin, and may be, for example, polyphenylene sulfide or the like.

In addition, the metal oxide used as an additive is not limited to titanium oxide (IV) (TiO₂), but may be silicon dioxide (SiO₂), zirconia (ZrO₂), cerium oxide (IV) (CeO₂), or may be changed as appropriate.

### {REFERENCE SIGNS LIST}

- 10: Testing device
- 11: Fixed ring (sliding component)
- 12: Holding mechanism
- 13: Rotating ring
- 14: Rotary shaft

## Claims

1. A sliding component having a sliding surface that is subjected to relative sliding, comprising:
coke and graphite as carbonaceous materials; and
resin carbide,
wherein a content of the graphite is more than 0 wt% and less than 6 wt%, and the coke constitutes a main component of the carbonaceous materials.

2. The sliding component according to claim 1,
wherein the coke is contained in an amount of 30 wt% or more.

3. The sliding component according to claim 1,
wherein carbon black is contained as the carbonaceous material in an amount of more than 0 wt% and less than 5 wt%.

4. The sliding component according to claim 1,
wherein clay is contained as an additive in an amount of more than 3 wt% and less than 12 wt%.

5. The sliding component according to claim 1,
wherein activated carbon is contained as the carbonaceous material in an amount of more than 0 wt% and less than 20 wt%.

6. The sliding component according to claim 1,
wherein the resin carbide is contained in an amount of more than 10 wt% and less than 50 wt%.

7. The sliding component according to claim 6,
wherein the resin carbide is a phenolic resin carbide.

8. The sliding component according to claim 1,
wherein a metal oxide is contained as an additive in an amount of more than 0 wt% and less than 8 wt%.

9. The sliding component according to claim 1,
wherein the graphite is contained in an amount of 1 wt% or more and less than 6 wt%, carbon black is contained in an amount of more than 0 wt% and less than 5 wt%, clay is contained in an amount of more than 3 wt% and less than 12 wt%, activated carbon is contained in an amount of more than 0 wt% and less than 20 wt%, the resin carbide is contained in an amount of more than 10 wt% and less than 50 wt%, and a remainder consists of the coke.

10. The sliding component according to claim 1,
wherein the graphite is contained in an amount of 1 wt% or more and less than 6 wt%, carbon black is contained in an amount of more than 0 wt% and less than 5 wt%, clay is contained in an amount of more than 3 wt% and less than 12 wt%, activated carbon is contained in an amount of more than 0 wt% and less than 20 wt%, the resin carbide is contained in an amount of more than 10 wt% and less than 50 wt%, metal oxide is contained in an amount of more than 0 wt% and less than 8 wt%, and a remainder consists of the coke.

11. The sliding component according to any one of claims 1 to 10,
wherein a sliding surface layer of the sliding component is not impregnated with resin.
